(19) Europäisches Patentamt / European Patent Office / Office européen des brevets

(11) **EP 3 994 025 B1**

(12) **EUROPÄISCHE PATENTSCHRIFT**

(45) Veröffentlichungstag und Bekanntmachung des Hinweises auf die Patenterteilung:
**24.04.2024 Patentblatt 2024/17**

(21) Anmeldenummer: **20735506.6**

(22) Anmeldetag: **23.06.2020**

(51) Internationale Patentklassifikation (IPC):
**B60L 15/20** (2006.01)   **H02P 21/02** (2006.01)
**B60W 30/20** (2006.01)   **H02P 23/04** (2006.01)

(52) Gemeinsame Patentklassifikation (CPC):
**B60L 15/20; B60W 30/20; H02P 23/04;**
B60L 2240/421; B60L 2240/423; B60L 2240/461;
B60L 2270/14; Y02T 10/64; Y02T 10/72

(86) Internationale Anmeldenummer:
**PCT/EP2020/067402**

(87) Internationale Veröffentlichungsnummer:
**WO 2021/001201 (07.01.2021 Gazette 2021/01)**

(54) **VERFAHREN UND VORRICHTUNG ZUM BETREIBEN EINER ANTRIEBSANORDNUNG EINES KRAFTFAHRZEUGS, ANTRIEBSANORDNUNG**

METHOD AND DEVICE FOR OPERATING A DRIVE ASSEMBLY OF A MOTOR VEHICLE, DRIVE ASSEMBLY

PROCÉDÉ ET DISPOSITIF POUR FAIRE FONCTIONNER UN SYSTÈME D'ENTRAÎNEMENT D'UN VÉHICULE AUTOMOBILE, ET SYSTÈME D'ENTRAÎNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.07.2019 DE 102019209857**

(43) Veröffentlichungstag der Anmeldung:
**11.05.2022 Patentblatt 2022/19**

(73) Patentinhaber: **Robert Bosch GmbH 70442 Stuttgart (DE)**

(72) Erfinder:
• **KREIDEL, Tim
89231 Neu-Ulm (DE)**
• **KRETSCHMER, Markus
71636 Ludwigsburg (DE)**

(56) Entgegenhaltungen:
EP-A1- 3 249 806        EP-A2- 2 423 065
EP-B1- 0 845 088        DE-A1- 10 145 891
DE-A1-102009 054 603    US-A- 5 534 764
US-A1- 2012 081 051

## Beschreibung

Die Erfindung betrifft ein Verfahren zum Betreiben einer eine elektrische Maschine aufweisenden Antriebsanordnung eines Kraftfahrzeugs, wobei der elektrischen Maschine in Abhängigkeit von einer Drehmomentanforderung ein Soll-Drehmoment vorgegeben wird, und wobei eine Ist-Drehzahl der elektrischen Maschine überwacht und in Abhängigkeit von der erfassten Ist-Drehzahl eine Drehzahlschwingung der elektrischen Maschine bestimmt und das Soll-Drehmoment mit einem in Abhängigkeit von der Drehzahlschwingung ermittelten Kompensationsdrehmoment überlagert wird.

Weiterhin betrifft die Erfindung eine Vorrichtung zur Durchführung des obenstehenden Verfahrens sowie eine Antriebsanordnung mit der vorstehend beschriebenen Vorrichtung.

Stand der Technik

Verfahren der eingangs genannten Art sind aus dem Stand der Technik bereits bekannt. Zunehmend werden elektrische Maschinen als Antriebsmotoren in Antriebsanordnungen von Kraftfahrzeugen eingesetzt. Dabei sind Antriebsanordnungen bekannt, die nur eine oder mehrere elektrische Maschinen aufweisen, sowie Antriebsanordnungen, die neben einer elektrischen Maschine auch noch einen herkömmlichen Verbrennungsmotor nutzen. Eine grundlegende Eigenschaft von Antriebsanordnungen und Kraftfahrzeugen ist deren Schwingungsfähigkeit. Selbst bei einem konstanten Antriebsdrehmoment, das von der elektrischen Maschine bereitgestellt wird, kann die Drehzahl der Maschine schwingen. Dies ist unabhängig davon, ob es sich bei der Antriebsanordnung um eine sogenannte elektrische Achse, das heißt eine elektrische Maschine, die durch ein Differentialgetriebe direkt mit Antriebsrändern des Kraftfahrzeugs verbunden ist, um einen konventionellen Antriebsstrang oder um einen Radnabenantrieb handelt. Die entstehenden Schwingungen führen zu Komforteinbußen sowie zu einer mechanischen Belastung des Kraftfahrzeugs, insbesondere der Antriebsanordnung.

Um diese Komforteinbußen sowie mechanischen Belastungen zu vermeiden, ist es bekannt, dem der elektrischen Maschine vorgegebenen Soll-Drehmoment ein Kompensationsdrehmoment zu überlagern, das dämpfend auf die Schwingungen wirkt. Um das Kompensationsdrehmoment effizient zu gestalten, ist es unerlässlich, aus dem Drehzahlverlauf der elektrischen Maschine den für die Schwingungen verantwortlichen Schwingungsanteil zu extrahieren. Hierzu ist es beispielsweise bekannt, einen Hochpassfilter zu verwenden, um die relevanten Schwingungsanteile herauszufiltern. Derartige filterbasierte Algorithmen kommen jedoch schnell an ihre Grenzen, wenn sich der Fahrzustand des Kraftfahrzeugs schlagartig ändert. Dies ist beispielsweise dann der Fall, wenn ein automatisierter Bremseingriff, beispielsweise durch ein ABS- oder ESP-System (ABS = Antiblockiersystem, ESP = Elektronisches Stabilitätsprogramm), auf die Räder, insbesondere die Antriebsräder des Kraftfahrzeugs wirkt. Die Dokumente EP 242 30 65 und DE 10 2009 054 603 offenbaren Steuerungen für eine elektrische Maschine in einem Antriebsstrang mit einem Zweimassenschwingmodell. Die Dokumente DE 101 45 891 A1, US 2012 / 081 051 A1, EP 3 249 806 A1, US 5 534 764 A offenbaren Verfahren und Vorrichtungen zum Betreiben einer eine elektrische Maschine aufweisenden Antriebsanordnung eines Kraftfahrzeugs.

Offenbarung der Erfindung

Das erfindungsgemäße Verfahren mit den Merkmalen des Anspruchs 1 hat den Vorteil, dass kostengünstig und mit verhältnismäßig geringem Rechenaufwand die relevante Drehzahlschwingung bzw. Schwingung bzw. Schwingungsdrehzahl der elektrischen Maschine ermittelt bzw. bestimmt bzw. berechnet wird. Durch das erfindungsgemäße Verfahren wird eine robuste Berechnungsvorschrift für die Ermittlung der Drehzahlschwingung bzw. Schwingungsdrehzahl bzw. für den Schwingungsanteil der elektrischen Maschine bereitgestellt. Im Vergleich zu bekannten Verfahren wird dabei vorteilhaft der Applikationsaufwand für die Anwendung des Verfahrens reduziert, indem nur wenige Applikationsparameter (z.B. Faktoren, Konstanten, etc.) mittels aufwändiger Fahrzeugtests bestimmt werden müssen. Gegenüber einfachen Filterfunktionen (z.B. Hochpassfiltern), die ebenfalls mit nur wenigen Parametern auskommen, wird vorteilhaft bewirkt, dass z.B. bei schlagartigen Drehzahländerungen, wie sie z.B. durch einen ABS-Eingriff oder einen schlechten Fahrbahnuntergrund bewirkt werden können, die mechanische Belastung der Antriebsanordnung bzw. des Antriebsstranges erheblich reduziert werden kann. Denn eine einfache Filterfunktion kann bei derartigen Unstetigkeiten zu starken Überschwingern führen.

Erfindungsgemäß ist dazu vorgesehen, dass die Drehzahlschwingung $\omega_{Osc}$ der Ist-Drehzahl $\omega_{EM}$ der elektrischen Maschine bestimmt wird unter Verwendung eines mehrdimensionalen Reglers mit einem Zweimassenschwingmodell, einem Ist-Drehmoment $T_{EM}$ der elektrischen Maschine und der Ist-Drehzahl $\omega_{EM}$ der elektrischen Maschine.

Dabei kann die Ist-Drehzahl $\omega_{EM}$ der elektrischen Maschine lediglich beispielhaft durch einen Sensor erfasst bzw. gemessen werden. Dies kann z.B. auch ein Winkelsensor sein, der den Drehwinkel der elektrischen Maschine erfasst und dann über die zeitliche Ableitung die Drehzahl bestimmt wird.

Dabei kann das Ist-Drehmoment $T_{EM}$ der elektrischen Maschine lediglich beispielhaft durch eine Messung bzw. Erfassung des elektrischen Stroms, mit dem die elektrische Maschine angetrieben wird, erfasst bzw. gemessen bzw. bestimmt werden. Das Ist-Drehmoment $T_{EM}$ ergibt sich z.B. aus der Differenz des Soll-Drehmoments $T_{Soll}$ und des Kompensationsdrehmoments $T_D$, also: $T_{EM} = T_{Soll} - T_D$.

Das Zweimassenschwingmodell kann als vereinfachendes Modell verstanden werden. In ihm werden sämtliche Komponenten der Antriebsanordnung sowie die Fahrzeugmasse bezüglich ihrer Massen, Dämpfungskonstanten und Federkonstanten durch ein System aus zwei Massen ersetzt, zwischen denen ein Feder-Dämpfungssystem angeordnet ist. Dies vereinfacht erheblich die Anzahl der zu berücksichtigenden Parameter. Dabei kann die eine Masse z.B. die Masse des Rotors der elektrischen Maschine sein. Dabei kann die andere Masse z.B. die Masse des Fahrzeugs sein. Diese kann z.B. von einer translatorischen Masse in eine äquivalente rotatorische Masse umgerechnet werden, die dem angetriebenen Rad zugerechnet wird. Die anderen Komponenten, z.B. ein Getriebe oder eine Antriebswelle werden dann durch das Feder-Dämpfungssystem substituiert bzw. modelliert. Die Parameter des Feder-Dämpfungssystems können z.B. vorab durch Messungen am Fahrzeug bestimmt werden und dann z.B. als konstant betrachtet werden.

Der mehrdimensionale Regler ist hier ein Regler, in den mehrere Eingangswerte eingespeist werden, wobei jeder Eingangswert einer Dimension des Reglers entspricht. Aus diesen Eingangsgrößen, die z.B. kontinuierlich dem mehrdimensionalen Regler zugeführt werden, wird, z.B. unter Zuhilfenahme des Zweimassenschwingmodells, zumindest eine Ausgangsgröße bestimmt bzw. berechnet bzw. ermittelt. Durch diese Ausgangsgröße soll die Drehzahlschwingung $\omega_{Osc}$ verringert bzw. minimiert werden. Dabei kann die Ausgangsgröße dem mehrdimensionalen Regler z.B. mittelbar oder unmittelbar wieder als Teil einer Eingangsgröße zurückübermittelt werden. Hier kann die Ausgangsgröße z.B. das Kompensations-Drehmoment $T_D$ bzw. das Dämpfungsdrehmoment $T_D$ sein. Der mehrdimensionale Regler kann z.B. in einem Computerprogramm realisiert sein oder hardwarebasiert (z.B. in einem ASIC) realisiert sein.

Der mehrdimensionale Regler kann besonders vorteilhaft ein lediglich zweidimensionaler Regler sein. In diesen gehen nur zwei Eingangsgrößen (z.B. das Ist-Drehmoment $T_{EM}$ der elektrischen Maschine und die Ist-Drehzahl $\omega_{EM}$ der elektrischen Maschine) ein, die z.B. kontinuierlich erfasst werden.

Unter der Drehzahlschwingung $\omega_{Osc}$ kann eine Oszillation bzw. Schwingung bzw. ein Pendeln der Drehzahl der elektrischen Maschine um eine modellhaft zu betrachtende quasi-stationäre Frequenz verstanden werden. Dabei kann die Drehzahlschwingung $\omega_{Osc}$ auch auf sehr kurzen Zeitskalen auftreten, z.B. auf einer Zeitskala von weniger als 1ms oder sogar weniger als 0,5ms.

Die Drehzahlschwingung $\omega_{Osc}$ kann z.B. wie folgt entstehen. Die Antriebsanordnung kann z.B. aus der elektrischen Maschine, einem nachgelagerten Getriebe, einer Antriebswelle und einem davon angetriebenen Rad bestehen. Ebenfalls kann die Fahrzeugmasse Bestandteil der Antriebsanordnung sein. Es können auch weniger oder mehr Elemente zu der Antriebsanordnung gehören. Alle diese Komponenten weisen gewisse Massen, gewisse Federmomente, gewisse Dämpfungskonstanten und gewisse Trägheitsmomente auf. Wird nun z.B. bei einem stehenden Fahrzeug mittels der elektrischen Maschine ein Drehmoment auf die Antriebswelle gegeben und von diesem auf das Rad übertragen, so wirkt die Antriebswelle wie eine Torsionsfeder. Mit anderen Worten: das anliegende Drehmoment führt zum einen zu einer ansteigenden Ist-Drehzahl $\omega_{EM}$ der elektrischen Maschine. Durch die als Feder wirkende Antriebswelle kommt es jedoch zu einer Oszillationsbewegung, da die Antriebswelle nach der ersten "Vorspannung" relaxiert und somit entgegen der eigentlichen Antriebsrichtung zurückpendelt. Dadurch wird die Ist-Drehzahl $\omega_{EM}$ gegenüber einem idealen, vollkommen starren System verringert. Der Unterschied zwischen dem idealen, nicht federnden System und der Ist-Drehzahl $\omega_{EM}$ entspricht der Drehzahlschwingung $\omega_{Osc}$. Die Dauer und die Amplitude der Drehzahlschwingung sollen möglichst gering gehalten werden, um z.B. unerwünschte Geräusche, ein Ruckeln im Fahrzeug und vorzeitige Materialermüdung zu minimieren. Ist man in der Lage, die Drehzahlschwingung zu erkennen bzw. vorauszusehen, so kann deren Dauer und Amplitude verringert werden durch das Beaufschlagen eines geeigneten Dämpfungsdrehmoments $T_D$ bzw. Kompensationsdrehmoments $T_D$ auf die elektrische Maschine. Mit anderen Worten, man kann eine Art Drehmoment-Stoßdämpfer bereitstellen.

In gleicher Weise kann eine Drehzahlschwingung $\omega_{Osc}$ z.B. bei einer plötzlichen Fahrzustandsänderung ausgelöst werden. Gerät das angetriebene Rad z.B. auf Glatteis, so dass das Rad durchdreht, dann verändert sich schlagartig die am Rad hängende bzw. angreifende Masse (nämlich die zu bewegende Fahrzeugmasse). Dies verursacht durch die sich ändernde rotierende Masse des Rades (die äquivalente Fahrzeugmasse entfällt zumindest teilweise) ein plötzliches Vorschnellen der als Torsionsfeder auffassbaren Antriebswelle, was wiederum zu einer Drehzahlschwingung führt, bis das System wieder in einen stationären Zustand gerät bzw. die Schwingung abklingt. In diesem Beispiel kann zusätzlich in der als Feder-Masse-System auffassbaren Antriebsanordnung bzw. Antriebsstrang eine Änderung der Eigenfrequenz $\omega_{Eig}$ auftreten (durch die sich ändernde effektiv am Rad angreifende Masse), was wiederum die Drehzahlschwingung $\omega_{Osc}$ beeinflussen kann. Auch in diesem Szenario ist es wünschenswert, die Amplitude und Dauer der Drehzahlschwingung $\omega_{Osc}$ möglichst gering zu halten.

Durch die Erfindung wird vorteilhaft ein besonders wirksamer Drehmoment-Stoßdämpfer bereitgestellt, der mit lediglich zwei zu messenden bzw. zu erfassenden Eingangsgrößen und den vorab bestimmbaren Parametern eines Zweimassenschwingmodells der Antriebsanordnung auskommt. Dies minimiert den Rechenaufwand bei der Anwendung, außerdem wird die Anzahl der zu erfassenden bzw. zu überwachenden Messgrößen und damit die Anzahl der Sensoren vorteilhaft verringert. Schließlich können die vorab zu ermittelnden Größen, z.B. des Zweimassenschwingmodells, mit nur geringem Aufwand ermittelt werden, so dass die Kosten gering bleiben. Z.B. können die Parameter für das Zweimassenschwingmodell dadurch erfasst werden bzw. bestimmt werden, indem in einem Fahrzeug in einer Testumgebung die elektrische Maschine aus dem Stand auf ein gewisses Drehmoment gebracht wird und die Reaktion des Fahrzeugs bzw. der Antriebsanordnung auf diese plötzliche Drehmomentänderung detailliert vermessen bzw. erfasst wird. Mit derartigen Daten kann dann z.B. das Zweimassenschwingmodell parametriert werden.

Mithilfe eines mehrdimensionalen Reglers und eines Modells eines Zweimassenschwingers kann die Bewegungsdynamik der elektrischen Maschine einfach beschrieben werden bzw. der Bewegungsanteil der elektrischen Maschine unter Berücksichtigung der Massen und Trägheitsmomente der Antriebsanordnung. Mithilfe des mehrdimensionalen Reglers werden insbesondere das Ist-Drehmoment $T_{EM}$ der elektrischen Maschine sowie die erfasste Ist-Drehzahl $\omega_{EM}$ der elektrischen Maschine in geeigneter Weise derart miteinander verknüpft, dass die zur Schwingungskompensation notwendige Drehzahlschwingung $\omega_{Osc}$ berechnet bzw. ermittelt bzw. bestimmt werden kann.

Vorzugsweise werden bei der Bestimmung der Drehzahlschwingung $\omega_{Osc}$ eine Eigenfrequenz $\omega_{Eig}$ der Antriebsanordnung, insbesondere der elektrischen Maschine, und eine Massenträgheit der elektrischen Maschine berücksichtigt. Die Eigenfrequenz $\omega_{Eig}$ und die Massenträgheit $J_{EM}$ werden vorzugsweise vor der Applikation im Kraftfahrzeug ermittelt, insbesondere mittels eines Tests erfasst beziehungsweise gemessen und/oder berechnet. Dadurch wird vorteilhaft bewirkt, dass das Dämpfungsdrehmoment $T_D$ bzw. Kompensationsdrehmoment $T_D$ besonders wirksam bestimmt und bereitgestellt werden kann. Bevorzugt wird das Kompensationsdrehmoment $T_D$ mit einer Frequenz bereitgestellt, die der Eigenfrequenz $\omega_{Eig}$ der Antriebsanordnung möglichst nahe kommt bzw. im Wesentlichen entspricht. Die Eigenfrequenz $\omega_{Eig}$ kann z.B. üblicherweise im Bereich zwischen 5Hz und 30 Hz liegen. Die Eigenfrequenz kann z.B. bei voller Haftfähigkeit des angetriebenen Rades auf dem Untergrund bestimmt werden, wodurch die Fahrzeugmasse als äquivalente rotierende Masse dem Rad zugerechnet wird. Sollte das Rad z.B. durchdrehen, so entfällt dieser äquivalente Anteil der Fahrzeugmasse. Die Eigenfrequenz erhöht sich in diesem Fall.

Die Bereitstellung der Massenträgheit $J_{EM}$ der elektrischen Maschine bewirkt vorteilhaft ebenfalls eine Verbesserung der Dämpfungsgeschwindigkeit, d.h. verringert die Zeit, innerhalb derer die Drehzahlschwingung $\omega_{Osc}$ abklingt.

In einer Weiterbildung ist vorgesehen, dass die Drehzahlschwingung ($\omega_{Osc}$) mithilfe folgender zwei Gleichungen berechnet bzw. bestimmt wird:

$$\omega_{2,T\_EM} = \frac{s\left(s+\frac{K_N}{4}\right)}{(s+K_N)^4} \cdot \frac{4}{J_{EM} \cdot \omega_{Eig}^2} \cdot K_N^3 \cdot T_{EM} \qquad \text{(Gl. 1)}$$

$$\omega_{2,\omega\_EM} = -\frac{\left(s+\frac{K_N}{4}\right)\cdot\left(s^2+K_S \cdot \omega_{Eig}^2\right)}{(s+K_N)^4} \cdot \frac{4 \cdot K_N^3}{\omega_{Eig}^2} \cdot \omega_{EM} \qquad \text{(Gl. 2)}.$$

Dabei ist $\omega_{2,T\_EM}$ der berechnete Anteil der Raddrehzahl $\omega_2$, der dem Ist-Drehmoment $T_{EM}$ der elektrischen Maschine zuzuordnen ist. Dabei ist $\omega_{2,\omega\_EM}$ der berechnete Anteil der Raddrehzahl $\omega_2$ ist, der der bestimmten Ist-Drehzahl $\omega_{EM}$ der elektrischen Maschine zuzuordnen ist. Dabei sind $\omega_{Eig}$ die Eigenfrequenz der Antriebsanordnung, $J_{EM}$ die Massenträgheit der elektrischen Maschine, $K_N$, $K_S$ vorgebbare Skalierungsfaktoren sowie $s$ der Laplace-Operator. Es sei angemerkt, dass der Ausdruck "T_EM" in Gleichung 1 dem Ausdruck "$T_{EM}$" entspricht und der Ausdruck "$\omega$_EM" in Gleichung 2 dem Ausdruck "$\omega_{EM}$" - die unterschiedlichen Ausdrücke sind der Darstellbarkeit geschuldet.

Mögliche Werte für die (z.B. konstanten) Skalierungsfaktoren $K_N$ und $K_S$ sind beispielsweise $K_N = 150$ und $K_S = 1,15$. Beispielsweise kann $K_N$ auch im Bereich von 100 bis 200 liegen und $K_S$ im Bereich von 0,9 bis 1,5. Die Skalierungsfaktoren $K_N$ und $K_S$ können z.B. unter Kenntnis der Eigenfrequenz $\omega_{Eig}$ durch Simulation vorab bestimmt werden.

Durch die Berücksichtigung lediglich dieser zwei, z.B. durch Tests am Fahrzeug zu ermittelnder, Werte (Massenträgheit der elektrischen Maschine $J_{EM}$ und Eigenfrequenz der Antriebsanordnung $\omega_{Eig}$) im Zweimassenschwinger-Modell kann die Parametrierung des Modells besonders einfach und mit wenig Zeitaufwand und damit besonders kostengünstig erfolgen. Bei herkömmlichen Zweimassenschwinger-Modellen werden nämlich üblicherweise außerdem noch eine Federsteifigkeit $c$, eine Dämpfungskonstante $k$ sowie eine rotierende Massenträgheit $J_2$ berücksichtigt, was die Parametrierung erheblich aufwändiger macht. Es hat sich gezeigt, dass diese Parameter für die Bestimmung der Schwingung beziehungsweise Drehzahlschwingung der elektrischen Maschine vernachlässigbar sind. Optional werden sie berücksichtigt, gemäß der vorstehend beschriebenen Ausführungsform jedoch nicht.

Weiterhin können zur Berechnung der Raddrehzahl $\omega_2$ die berechneten Anteile $\omega_{2,T\_EM}$ und $\omega_{2,\omega\_EM}$ addiert werden. Mit anderen Worten: zur Berechnung der Raddrehzahl $\omega_2$ können die beiden obigen Gleichungen (Gl 1) und (Gl. 2) addiert werden. Mit anderen Worten: $\omega_2 = \omega_{2,T\_EM} + \omega_{2,\omega\_EM}$. Dadurch kann vorteilhaft eine besonders einfache und schnelle Bestimmung der Raddrehzahl $\omega_2$ erreicht werden, die wenig Prozessorleistung erfordert. Weitere Korrekturterme können unberücksichtigt bleiben, ohne dass das Ergebnis der berechneten Raddrehzahl $\omega_2$ zu stark verfälscht wird.

Weiterhin ist bevorzugt vorgesehen, dass die Drehzahlschwingung $\omega_{Osc}$ der Ist-Drehzahl $\omega_{EM}$ aus der Differenz von Ist-Drehzahl $\omega_{EM}$ und Raddrehzahl $\omega_2$ berechnet wird. Mit anderen Worten: $\omega_{Osc} = \omega_{EM} - \omega_2$. Dadurch kann vorteilhaft aus einer schwingenden Drehzahl der elektrischen Maschine (z.B. mit einer Frequenz, die zwischen 900Hz und 1100 Hz um den Mittelwert 1000Hz pendelt, wobei $\omega_{Osc}$ in diesem Beispiel die Drehzahlschwingung um die mittlere Frequenz 1000Hz darstellt) die Drehzahlschwingung $\omega_{Osc}$ so extrahiert werden, dass sie im Wesentlichen um die Nulllinie schwingt bzw. oszilliert bzw. pendelt. Dann lässt sich vorteilhaft das Dämpfungsdrehmoment $T_D$ z.B. durch eine einfache Multiplikation mit einem Faktor unmittelbar aus der Drehzahlschwingung bestimmen.

Die erfindungsgemäße Vorrichtung mit den Merkmalen des Anspruchs 6 zeichnet sich dadurch aus, dass sie als Steuergerät dazu eingerichtet ist, das erfindungsgemäße Verfahren durchzuführen, insbesondere bei bestimmungsgemäßem Gebrauch. Es ergeben sich dabei die zuvor bereits genannten Vorteile.

Die erfindungsgemäße Antriebsanordnung mit den Merkmalen des Anspruchs 7 zeichnet sich durch die erfindungsgemäße Vorrichtung aus.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnungen näher erläutert werden. Dazu zeigen

Figur 1    ein Kraftfahrzeug mit einer vorteilhaften Antriebsanordnung in einer vereinfachten Darstellung,

Figur 2    einen mehrdimensionalen Regler für die Antriebsanordnung,

Figur 3    eine Berechnungsvorschrift zum Bestimmen einer Raddrehzahl der Antriebsanordnung,

Figur 4    einen Vergleich des erfindungsgemäßen Verfahrens mit einer herkömmlichen Lösung und dem Idealfall,

Figur 5    eine Detailansicht des Vergleichs und

Figur 6    eine zweite Detailansicht des Vergleichs.

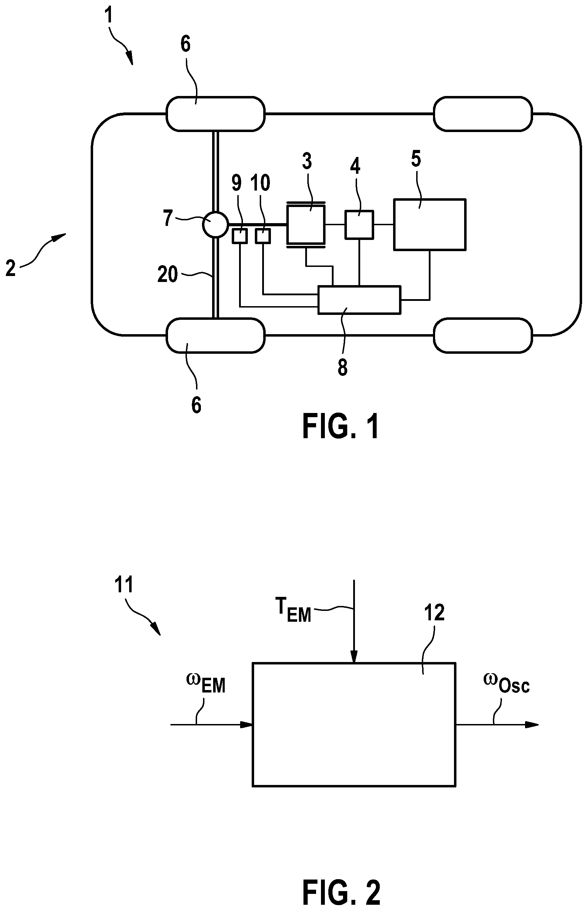

Figur 1 zeigt in einer vereinfachten Darstellung ein Kraftfahrzeug 1 mit einer vorteilhaften Antriebsanordnung 2. Die Antriebsanordnung 2 weist vorliegend als Antriebseinrichtung eine elektrische Maschine 3 auf, welcher eine Leistungselektronik 4 zum Ansteuern der elektrischen Maschine 3 sowie ein elektrischer Energiespeicher 5 zugeordnet sind. Die elektrische Maschine 3 (auch als elektrische Antriebsmaschine bezeichenbar) ist gemäß dem vorliegenden Ausführungsbeispiel mit zwei Antriebsrädern 6 durch ein Differentialgetriebe 7 verbunden. Außerdem kann zwischen dem Differentialgetriebe und den Antriebsrädern 6 noch eine Antriebswelle 20 angeordnet sein, die ebenfalls zur Antriebsanordnung 2 gerechnet werden kann.

Weiterhin weist die Antriebsanordnung 2 ein Steuergerät 8 auf, welches die Leistungselektronik 4 betreibt, um ein Soll-Drehmoment $T_{Soll}$ der elektrischen Maschine 3 einzustellen. Das Steuergerät 8 ist außerdem mit einer Sensoreinrichtung 9 verbunden, welche eine Ist-Drehzahl $\omega_{EM}$ der elektrischen Maschine 3 erfasst, sowie mit einer Sensoreinrichtung 10, welche ein Ist-Drehmoment $T_{EM}$ der elektrischen Maschine 3 überwacht beziehungsweise erfasst. Die Sensoreinrichtungen 9, 10 sind in Figur 1 vereinfacht dargestellt. Sie können z.B. als Drehwinkelsensor bzw. Drehzahlsensor ausgebildet sein (erster Sensor 9) bzw. als Strommessvorrichtung (zweiter Sensor 10). Grundsätzlich können sie auch in die elektrische Maschine 3 integriert ausgebildet sein. Ebenso kann die Leistungselektronik 4 Bestandteil der elektrischen Maschine 3 sein.

Um Komforteinbußen und mechanische Überlastungen der Antriebsanordnung 2 zu vermeiden, ist das Steuergerät 8 dazu eingerichtet, eine Drehzahlschwingung $\omega_{Osc}$ der Ist-Drehzahl $\omega_{EM}$ zu bestimmen und in Abhängigkeit von der Drehzahlschwingung $\omega_{Osc}$ das Soll-Drehmoment $T_{Soll}$ mit einem Kompensationsdrehmoment $T_D$ bzw. Dämpfungsdrehmoment $T_D$ zu überlagern, um die auftretende Drehzahlschwingung $\omega_{Osc}$ in der Antriebsanordnung 2 zu vermeiden bzw. zu dämpfen bzw. schnell abklingen zu lassen. Dazu wird die Bewegungsdynamik der Antriebsanordnung 2 auf einen klassischen Zweimassenschwinger zurückgeführt, der in dem folgenden (Differential)Gleichungssystem beschrieben ist:

$$T_{EM} = J_{EM} \cdot \dot{\omega}_{EM} + k \cdot (\omega_{EM} - \omega_2) + c \cdot (\varphi_{EM} - \varphi_2)$$
$$-T_2 = J_2 \cdot \dot{\omega}_2 - k \cdot (\omega_{EM} - \omega_2) - c \cdot (\varphi_{EM} - \varphi_2) \qquad \text{(Gl. 3)}$$

Die Parameter $\varphi_2$, $T_2$ und $\omega_2$ beziehen sich dabei auf eine zweite schwingende Masse, beispielsweise auf ein durch die elektrische Maschine 3 angetriebenes Rad. Dabei ist $\varphi_2$ der Verdrehwinkel des Rades 6, $T_2$ ist das auf das Rad 6 wirkende Lastmoment, z.B. ein Fahrwiderstandsdrehmoment und $\omega_2$ ist die Drehzahl des Rades 6. Die Konstanten c und k bezeichnen die Federkonstante (c) bzw. die Dämpfungskonstante (k) des Feder-Dämpfer-Pakets zwischen den beiden schwingenden Massen. $J_2$ entspricht dabei dem Trägheitsmoment des Rades 6 und der in eine rotierende Masse umgerechneten Fahrzeugmasse.

Die tatsächliche Drehzahl des Rades 6 soll durch das Verfahren möglichst gut modellhaft berechnet bzw. ermittelt bzw. bestimmt werden, um so ein optimales Kompensationsdrehmoment $T_D$ bereitstellen zu können. Die berechnete Drehzahl $\omega_2$ des Rades ist im Idealfall identisch mit der realen Drehzahl des Rades 6. Durch den Einsatz des mehrdimensionalen Reglers 11 wird es durch das im Folgenden beschriebene Verfahren ermöglicht, eine robuste Berechnungsvorschrift für die Ermittlung der Drehzahlschwingung $\omega_{Osc}$ beziehungsweise des Schwingungsanteils $\omega_{Osc}$ der Ist-Drehzahl $\omega_{EM}$ der elektrischen Maschine 3 zu ermitteln. Dabei werden der Applikationsaufwand für klassische beobachterbasierte Funktionen reduziert und Nachteile herkömmlicher Filterfunktionen, wie beispielsweise Hochpassfilter, die bei stark nicht-linearen Fahrbetrieb auftreten können, beispielsweise aufgrund eines ABS-Eingriffs und/oder eines schlechten Fahrbahnuntergrunds, kompensiert.

Figur 2 zeigt dazu in einer vereinfachten Darstellung einen mehrdimensionalen Regler 11. Der Regler 11 erhält als Eingangswerte das erfasste Ist-Drehmoment $T_{EM}$ sowie die erfasste Ist-Drehzahl $\omega_{EM}$. Auf Basis des Zweimassenschwingers, wie in Gleichung Gl. 3 beschrieben, verknüpft der Regler 11 mittels einer Berechnungsvorschrift 12 die Eingangsgrößen des erfassten Ist-Drehmoments $T_{EM}$ sowie der erfassten Ist-Drehzahl $\omega_{EM}$ zur Berechnung der zur Schwingungskompensation notwendigen Drehzahlschwingung $\omega_{Osc}$. Dabei kann die Drehzahlschwingung $\omega_{Osc}$ letztlich wieder auf eine der beiden Eingangsgrößen mittelbar oder unmittelbar zurückgekoppelt werden. Dies ist aus Gründen der Übersichtlichkeit hier jedoch nicht dargestellt.

In die Berechnungsvorschrift 12 können z.B. die aus dem in Gleichung (Gl. 3) gezeigten Gleichungssystem des Zweimassenschwing-Modells extrahierbaren zwei separaten Gleichungen (Gl. 1) und (Gl. 2) eingehen.

Die erste Gleichung (Gl. 1) erlaubt die Berechnung der Größe $\omega_{2,T\_EM}$. Diese entspricht dem berechneten Anteil der zu berechnenden Raddrehzahl $\omega_2$, der dem Ist-Drehmoment $T_{EM}$ der elektrischen Maschine 3 zuzuordnen ist. Die Raddrehzahl $\omega_2$ kann z.B. die Einheit in Radiant/Sekunde aufweisen.

Die zweite Gleichung (Gl. 2) erlaubt die Berechnung von $\omega_{2,\,\omega\_EM}$. $\omega_{2,\,\omega\_EM}$ entspricht dem berechneten Anteil der Raddrehzahl $\omega_2$, der der bestimmten Ist-Drehzahl $\omega_{EM}$ der elektrischen Maschine 3 zuzuordnen ist.

Um die Aufgabe zur Berechnung des korrekten Schwingungsverhaltens durchzuführen, kann z.B. vor der Applikation ein Fahrzeugtest durchgeführt werden. Dadurch kann z.B. die Eigenfrequenz $\omega_{Eig}$ der Antriebsanordnung 2 ermittelt werden. Mithilfe der ebenfalls vorab bestimmbaren Massenträgheit $J_{EM}$ der elektrischen Maschine 3 können die oben beschriebenen physikalischen Zusammenhänge des Gleichungssystems (Gl. 3) in die folgenden zwei Gleichungen (Gl. 1 und Gl. 2) überführt werden:

$$\omega_{2,T\_EM} = \frac{s\left(s+\frac{K_N}{4}\right)}{(s+K_N)^4} \cdot \frac{4}{J_{EM}\cdot\omega_{Eig}^2} \cdot K_N^3 \cdot T_{EM} \qquad (\text{Gl. 1})$$

$$\omega_{2,\omega\_EM} = -\frac{\left(s+\frac{K_N}{4}\right)\cdot\left(s^2+K_S\cdot\omega_{Eig}^2\right)}{(s+K_N)^4} \cdot \frac{4\cdot K_N^3}{\omega_{Eig}^2} \cdot \omega_{EM} \qquad (\text{Gl. 2}).$$

Dabei ist $\omega_{2,T\_EM}$ der berechnete Anteil der Raddrehzahl $\omega_2$, der dem Ist-Drehmoment $T_{EM}$ der elektrischen Maschine zuzuordnen ist und $\omega_{2,\,\omega\_EM}$ der berechnete Anteil der Raddrehzahl $\omega_2$, der der bestimmten bzw. erfassten Ist-Drehzahl $\omega_{EM}$ der elektrischen Maschine zuzuordnen ist. Dabei sind weiterhin $\omega_{Eig}$ die Eigenfrequenz der Antriebsanordnung, $J_{EM}$ die Massenträgheit der elektrischen Maschine, $K_N$, Ks vorgebbare Skalierungsfaktoren und s der Laplace-Operator sind.

Die in den Gleichungen (Gl. 1 und Gl. 2) enthaltenen Skalierungsfaktoren $K_N$ und Ks sind Parameter, die z.B. durch Simulation voreinstellbar sind und im Zuge einer Fahrzeugapplikation getestet werden können. Mögliche Werte für $K_N$ und $K_S$ sind beispielsweise: $K_N$ = 150 und $K_S$ = 1,15. Beispielsweise kann $K_N$ auch im Bereich von 100 bis 200 liegen und Ks im Bereich von 0,9 bis 1,5.

Die zu berechnende Raddrehzahl $\omega_2$ kann z.B. durch die Addition der beiden Gleichungen (Gl. 1) und (Gl. 2) erzielt werden. Dann ergibt sich die zu berechnende Raddrehzahl $\omega_2$ wie folgt: $\omega_2 = \omega_{2,T\_EM} + \omega_{2,\omega\_EM}$.

Die Drehzahlschwingung $\omega_{Osc}$ kann z.B. durch die Differenz der Ist-Drehzahl $\omega_{EM}$ und der berechneten Raddrehzahl $\omega_2$ bestimmt werden. Die Drehzahlschwingung ergibt sich dann wie folgt: $\omega_{Osc} = \omega_{EM} - \omega_2$. Aus den Gleichungen (Gl. 1) und (Gl. 2) ist außerdem ersichtlich, dass im Vergleich zu dem in Gleichung (Gl. 3) beschriebenen Gleichungssystem die Parameter c, k und $J_2$ nicht enthalten sind. Die Federsteifigkeit bzw. Federkonstante c ist implizit in der Massenträgheit $J_{EM}$ der elektrischen Maschine 3 sowie in der Eigenfrequenz $\omega_{Eig}$ enthalten. Die Dämpfungskonstante k und die rotierende Massenträgheit $J_2$ können für das Verfahren vernachlässigt werden.

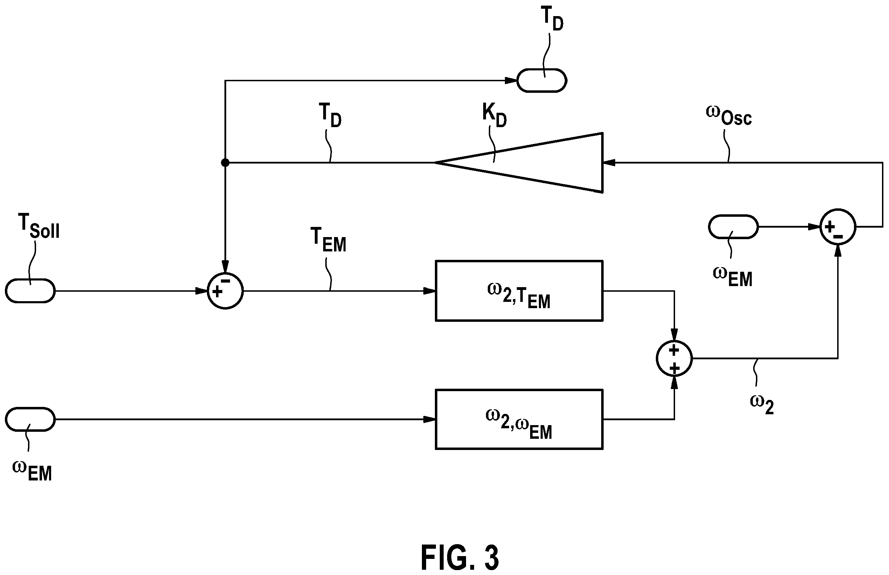

Figur 3 zeigt die Berechnung von $\omega_{Osc}$ und eines Kompensationsdrehmoments $T_D$ in einer vereinfachten Darstellung der Berechnungsvorschrift. Dabei beschreiben:

- der Parameter $T_{Soll}$ ein gewünschtes Soll-Drehmoment, z.B. in Newtonmeter;
- der Parameter $\omega_{EM}$ die Ist-Drehzahl der elektrischen Maschine 3, z.B. in Radiant/Sekunde;
- der Parameter $\omega_2$ die in Abhängigkeit von den Gleichungen (Gl. 1) und (Gl. 2) berechnete Raddrehzahl, z.B. in Radiant/Sekunde, und
- der Parameter $T_D$ das Kompensationsdrehmoment bzw. das Dämpfungsdrehmoment, z.B. in Newtonmeter;
- der Parameter $K_D$ eine Umrechnungsgröße bzw. einen Korrekturfaktor bzw. einen Umrechnungsfaktor, durch die bzw. durch den die ermittelte Drehzahlschwingung $\omega_{Osc}$ in das Kompensationsdrehmoment $T_D$ umgerechnet wird.

Aus Fig. 3 geht hervor, dass der Zusammenhang $T_{EM} = T_{Soll} - T_D$ gilt bzw. $T_{Soll} = T_{EM} + T_D$. Das Soll-Drehmoment $T_{Soll}$ ist somit gegeben durch eine Addition des Kompensationsdrehmoments $T_D$ zu dem Ist-Drehmoment $T_{EM}$.

Außerdem gilt $\omega_{Osc} = \omega_{EM} - \omega_2$, die Drehzahlschwingung $\omega_{Osc}$ ergibt sich also durch die Differenz aus der Ist-Drehzahl $\omega_{EM}$ der elektrischen Maschine 3 und der (berechneten) Raddrehzahl $\omega_2$. Es sei angemerkt, dass die Ist-Drehzahl $\omega_{EM}$ der elektrischen Maschine 3 an zwei Stellen in das in Fig. 3 dargestellte Berechnungsverfahren eingespeist wird.

Durch den hier lediglich zweidimensionalen Regler 11 ergibt sich ein geringer softwaretechnischer Aufwand für die Programmierung und gleichzeitig ergibt sich ein nur geringes Fehlerpotential. Insbesondere ergibt sich eine applikationsfreundliche Ausführung, bei welcher lediglich wenige Größen für die Parametrierung des Modells bzw. des mehrdimensionalen Reglers 11 vorab in Fahrzeugtests ermittelt werden müssen. Dies sind hier z.B. die Eigenfrequenz $\omega_{Eig}$ der Antriebsanordnung 2 und das Trägheitsmoment $J_{EM}$ der verwendeten elektrischen Maschine 3.

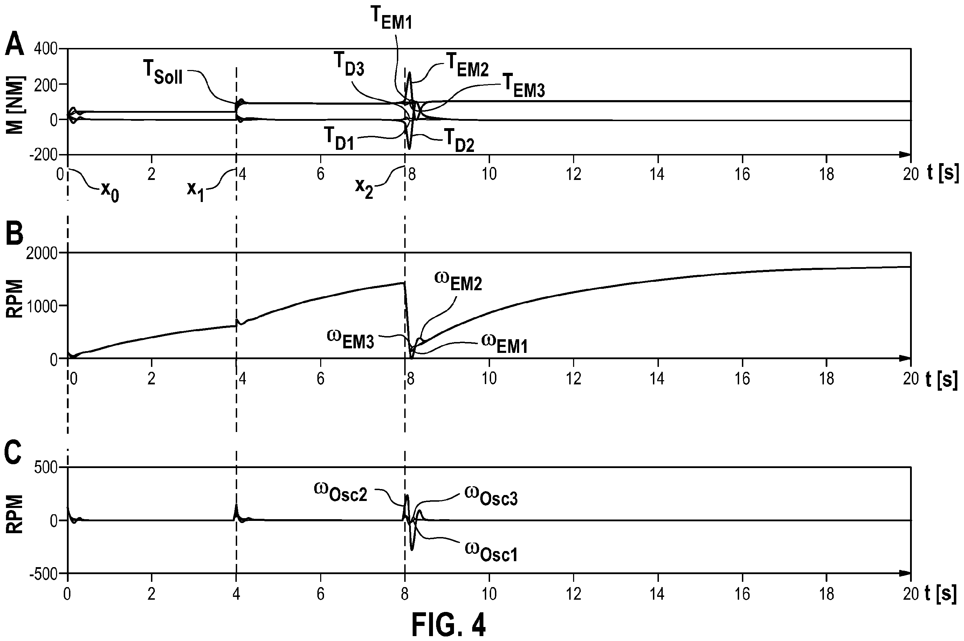

Anhand von Figuren 4, 5 und 6 sollen im Folgenden die Vorteile des vorteilhaften Verfahrens dargelegt werden. Dazu wird in den Figuren 4, 5 und 6 jeweils ein ideales System (Index 1), welches jedoch technisch nicht realisierbar ist, verglichen mit einer Ermittlung der Schwingungsdrehzahl mittels eines herkömmlichen (Index 2) sowie mittels des hier vorgestellten Verfahrens (Index 3).

Figur 4 zeigt über die Zeit t im Abschnitt A das Drehmoment, im Abschnitt B die Drehzahl und im Abschnitt C die zu ermittelnde Drehzahlschwingung $\omega_{Osc}$, die jeweils durch eine der Varianten (s.o., Index 1, 2 oder 3) ermittelt werden. Dabei

- zeigt die mit $T_{Soll}$ beschriftete Linie das gewünschte Soll-Drehmoment:

  - zeigen die mit $T_{EM}$ beschrifteten Linien jeweils das z.B. durch den zweiten Sensor 10 ermittelte Drehmoment der elektrischen Maschine 3 für die drei unterschiedlichen Varianten (s.o. Index 1 bis 3);

  - zeigen die mit $T_D$ beschrifteten Linien jeweils das Kompensationsdrehmoment;

  - zeigen die mit $\omega_{EM}$ beschrifteten Linien jeweils die Ist-Drehzahl einer Rotorwelle der elektrischen Maschine 3;

  - zeigen die mit $\omega_{Osc}$ beschrifteten Kurven jeweils die Drehzahlschwingung.

Die mit Index 1 gekennzeichneten Linien zeigen dabei jeweils das ideale Modell, die mit Index 2 gekennzeichneten Linien jeweils das herkömmliche Modell mit Hochpassfilter und die mit Index 3 gekennzeichneten Linien das Ergebnis des hier vorgestellten Verfahrens.

Figur 4 zeigt dabei einen Anfahrvorgang, bei welchem zu dem Zeitpunkt $x_0$ der die Antriebsanordnung 2 zunächst aus dem Ruhezustand mit einem Antriebsdrehmoment von $T_{EM} = 50$ Nm beschleunigt wird. Zu einem Zeitpunkt $x_1$, vorliegend nach 4 Sekunden, wird das Antriebsdrehmoment $T_{EM}$ auf 100 Nm erhöht. Zu einem Zeitpunkt $x_2$, vorliegend bei Sekunde 8, greift eine kurzzeitige, externe Störung in den Antriebsstrang bzw. in die Antriebsanordnung 2 ein. Dies kann grundsätzlich z.B. durch einen ABS-Einsatz oder einen ESP-Einsatz oder durch ein blockiertes oder durchdrehendes Rad 6 gegeben sein. In den Figuren 4 bis 6 wird - lediglich beispielhaft - ab Sekunde 8 ein blockiertes Rad 6 simuliert.

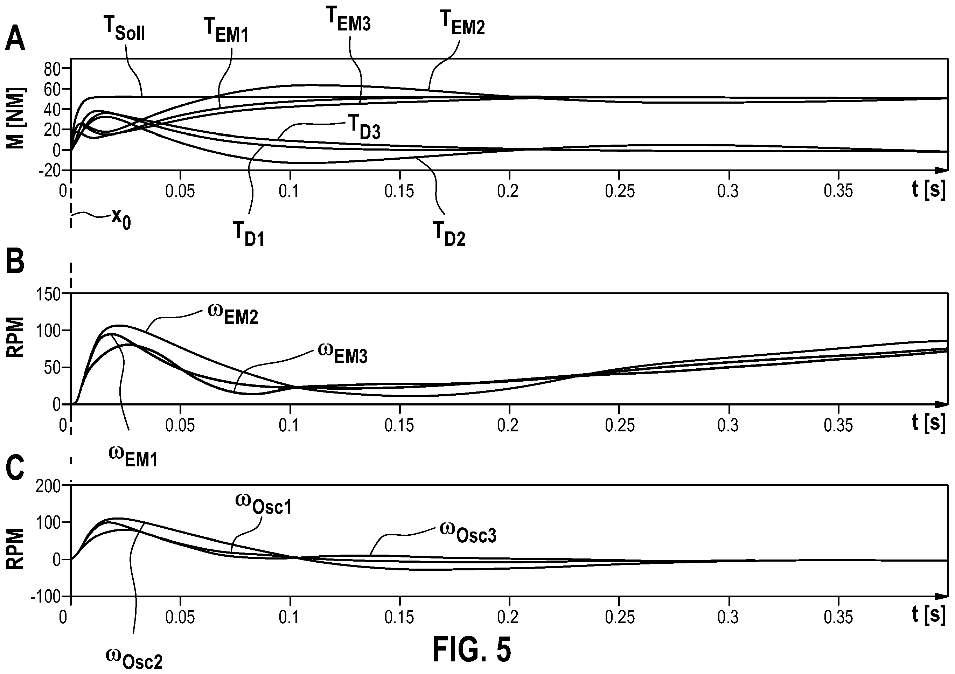

Figur 5 zeigt in einer höheren Auflösung den Anfahrtsvorgang innerhalb der ersten Sekunde. Der Vergleich des Systemverhaltens in den Abschnitten A, B und C zeigt deutlich, dass das Ist-Drehmoment $T_{EM}$ des hier vorgestellten Verfahrens (Index 3) deutlich näher am Referenzverhalten des Idealmodells (Index 1) liegen. Im Modell des herkömmlichen Hochpassfilters (Index 2) kommt es zu einem deutlichen Überschwingen im Ist-Drehmoment $T_{EM}$, welches mit einer stärkeren Drehzahlreaktion, d.h. z.B. einer größeren Amplitude der Drehzahlschwingung $\omega_{Osc}$ einhergeht. Außerdem dauert es länger, bis die Drehzahlschwingung $\omega_{Osc}$ abgeklungen ist.

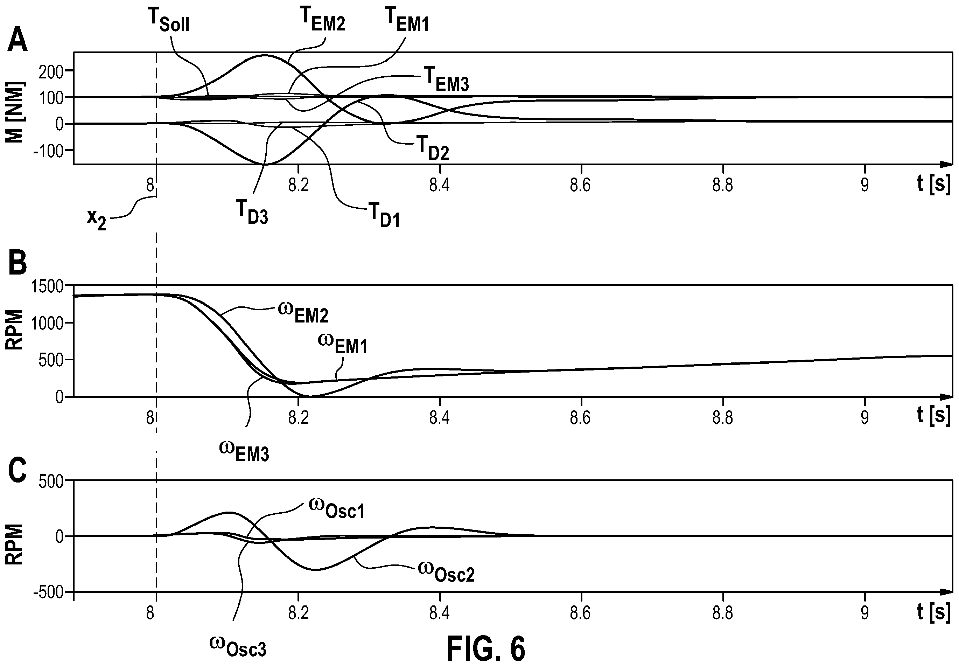

Figur 6 zeigt in einer erhöhten Auflösung das Auftreten der Störung zum Zeitpunkt $x_2$ ab Sekunde 8. Auch hier zeigen sich Unterschiede zwischen einem System mit Hochpassfilter (Index 2) und dem vorliegenden Verfahren (Index 3), verglichen mit dem Idealsystem (Index 1). Dabei treten hier die Unterschiede zwischen dem Hochpassfiltersystem (Index 2) und dem vorgeschlagenen Verfahren (Index 3) ungleich stärker auf. Der Testfall erzeugt eine massive Verzögerung der Antriebsräder 6, aus der über die relativ starre Kopplung der Räder an die elektrische Maschine 3 eine starke Verzögerung der elektrischen Maschine 3 resultiert. Figur 6 zeigt, dass das Verhalten des vorgeschlagenen Verfahrens (Index 3) nahezu dem des idealen Systems (Index 1) entspricht. Der herkömmliche Hochpassfilter (Index 2) sorgt auch für die Bereitstellung eines Dämpfungsdrehmoments $T_D$ bzw. Kompensationsdrehmoments $T_D$, welches die auftretende Drehzahlschwingung eigentlich dämpfen soll. Allerdings führt die Reaktion des Hochpassfilters anfangs zu einer kurzfristig auftretenden deutlichen Erhöhung des Ist-Drehmoments $T_{EM}$ der elektrischen Maschine 3 und damit zu einer unerwünschten Beschleunigung der elektrischen Maschine 3 - erst im späteren Verlauf wird die Drehzahlschwingung $\omega_{Osc}$ wirksam gedämpft. Daraus resultiert im Vergleich zum vorgeschlagenen Verfahren zum einen eine deutlich höhere Amplitude der Drehzahlschwingung $\omega_{Osc}$ sowie eine längere Dauer, bis diese abgeklungen ist.

**Patentansprüche**

1. Verfahren zum Betreiben einer eine elektrische Maschine (3) aufweisenden Antriebsanordnung (2) eines Kraftfahrzeugs (1),

   wobei der elektrischen Maschine (3) in Abhängigkeit von einer Drehmomentanforderung ein Soll-Drehmoment ($T_{Soll}$) vorgegeben wird, und wobei eine Ist-Drehzahl ($\omega_{EM}$) der elektrischen Maschine (3) überwacht und in Abhängigkeit von der erfassten Ist-Drehzahl ($\omega_{EM}$) eine Drehzahlschwingung ($\omega_{Osc}$) der elektrischen Maschine (3) bestimmt und das Soll-Drehmoment ($T_{Soll}$) mit einem in Abhängigkeit von der Drehzahlschwingung ($\omega_{Osc}$) ermittelten Kompensationsdrehmoment ($T_D$) überlagert wird,
   wobei die Drehzahlschwingung ($\omega_{Osc}$) der Ist-Drehzahl ($\omega_{EM}$) bestimmt wird unter Verwendung eines mehrdimensionalen Reglers (11) mit einem Zweimassenschwingmodell, einem Ist-Drehmoment ($T_{EM}$) der elektrischen Maschine (3) und der Ist-Drehzahl ($\omega_{EM}$) der elektrischen Maschine (3),
   **dadurch gekennzeichnet, dass**
   die Drehzahlschwingung ($\omega_{Osc}$) der Ist-Drehzahl ($\omega_{EM}$) aus der Differenz von Ist-Drehzahl ($\omega_{EM}$) und Raddrehzahl ($\omega_2$) berechnet wird und mithilfe folgender Gleichungen berechnet wird:

$$\omega_{2,T\_EM} = \frac{s\left(s+\frac{K_N}{4}\right)}{(s+K_N)^4} \cdot \frac{4}{J_{EM}\cdot\omega_{Eig}^2} \cdot K_N^3 \cdot T_{EM} \qquad \text{(Gl. 1)}$$

$$\omega_{2,\omega\_EM} = -\frac{\left(s+\frac{K_N}{4}\right)\cdot\left(s^2+K_S\cdot\omega_{Eig}^2\right)}{(s+K_N)^4} \cdot \frac{4\cdot K_N^3}{\omega_{Eig}^2} \cdot \omega_{EM} \qquad \text{(Gl. 2),}$$

   wobei $\omega_{2,T\_EM}$ der berechnete Anteil der Raddrehzahl ($\omega_2$) ist, der dem Ist-Drehmoment ($T_{EM}$) der elektrischen Maschine (3) zuzuordnen ist,
   und wobei $\omega_{2,\,\omega\_EM}$ der berechnete Anteil der Raddrehzahl ($\omega_2$) ist, der der bestimmten Ist-Drehzahl ($\omega_{EM}$) der elektrischen Maschine (3) zuzuordnen ist,
   und wobei $\omega_{Eig}$ die Eigenfrequenz der Antriebsanordnung (2), $J_{EM}$ die Massenträgheit der elektrischen Maschine (3), $K_N$, $K_S$ vorgebbare Skalierungsfaktoren sowie s der Laplace-Operator sind.

2. Verfahren nach Anspruch 1, **dadurch gekennzeichnet, dass** zur Berechnung der Raddrehzahl ($\omega_2$) die berechneten Anteile $\omega_{2,T\_EM}$ und $\omega_{2,\,\omega\_EM}$ addiert werden.

3. Vorrichtung zum Betreiben einer Antriebsanordnung (2), die zumindest eine elektrische Maschine (3) aufweist, **gekennzeichnet durch** die Ausbildung als Steuergerät (8), das dazu eingerichtet ist, das Verfahren gemäß einem der Ansprüche 1 bis 3 durchzuführen, insbesondere bei bestimmungsgemäßem Gebrauch.

4. Antriebsanordnung (2) für ein Kraftfahrzeug, mit zumindest einer elektrischen Maschine (3) und mit einer Vorrichtung (8) nach Anspruch 4.

**Claims**

1.  Method for operating a drive assembly (2) of a motor vehicle (1), which drive assembly has an electric machine (3),

    wherein a target torque ($T_{Soll}$) is specified for the electric machine (3) depending on a torque requirement, and wherein an actual speed ($\omega_{EM}$) of the electric machine (3) is monitored, and a speed oscillation ($\omega_{Osc}$) of the electric machine (3) is determined depending on the detected actual speed ($\omega_{EM}$), and the target torque ($T_{Soll}$) is superimposed with a compensation torque ($T_D$) which is ascertained depending on the speed oscillation ($\omega_{Osc}$), wherein the speed oscillation ($\omega_{Osc}$) of the actual speed ($\omega_{EM}$) is determined using a multidimensional controller (11) having a two-mass oscillation model, an actual torque ($T_{EM}$) of the electric machine (3) and the actual speed ($\omega_{EM}$) of the electric machine (3), **characterized in that** the speed oscillation ($\omega_{Osc}$) of the actual speed ($\omega_{EM}$) is calculated from the difference between the actual speed ($\omega_{EM}$) and the wheel speed ($\omega_2$) and is calculated using the following equations:

    $$\omega_{2,T\_EM} = \frac{s\left(s+\frac{K_N}{4}\right)}{(s+K_N)^4} \cdot \frac{4}{J_{EM} \cdot \omega_{Eig}^2} \cdot K_N^3 \cdot T_{EM} \qquad (\text{Eq. 1})$$

    $$\omega_{2,\omega\_EM} = -\frac{\left(s+\frac{K_N}{4}\right) \cdot \left(s^2+K_S \cdot \omega_{Eig}^2\right)}{(s+K_N)^4} \cdot \frac{4 \cdot K_N^3}{\omega_{Eig}^2} \cdot \omega_{EM} \qquad (\text{Eq. 2}),$$

    wherein $\omega_{2,T\_EM}$ is the calculated portion of the wheel speed ($\omega_2$) that can be associated with the actual torque ($T_{EM}$) of the electric machine (3), and wherein $\omega_{2,\omega\_EM}$ is the calculated portion of the wheel speed ($\omega_2$) that can be associated with the determined actual speed ($\omega_{EM}$) of the electric machine (3), and wherein $\omega_{Eig}$ is the natural frequency of the drive assembly (2), $J_{EM}$ is the mass inertia of the electric machine (3), $K_N$, $K_S$ are specifiable scaling factors and s is the Laplace operator.

2.  Method according to Claim 1, **characterized in that** the calculated portions $\omega_{2,T\_EM}$ and $\omega_{2,\omega\_EM}$ are added to calculate the wheel speed ($\omega_2$).

3.  Device for operating a drive assembly (2), which has at least one electric machine (3), **characterized by** the design as a control unit (8), which is configured to carry out the method according to one of Claims 1 to 3, in particular when used as intended.

4.  Drive assembly (2) for a motor vehicle, comprising at least one electric machine (3) and comprising a device (8) according to Claim 4.


**Revendications**

1.  Procédé permettant de faire fonctionner un système d'entraînement (2) d'un véhicule automobile (1), présentant une machine électrique (3),

    dans lequel un couple de consigne ($T_{Soll}$) est prédéfini pour la machine électrique (3) en fonction d'une demande de couple, et dans lequel un régime réel ($\omega_{EM}$) de la machine électrique (3) est surveillé, et en fonction du régime réel ($\omega_{EM}$) détecté, une oscillation de régime ($\omega_{Osc}$) de la machine électrique (3) est déterminée, et le couple de consigne ($T_{Soll}$) est superposé à un couple de compensation ($T_D$) établi en fonction de l'oscillation de régime ($\omega_{Osc}$), dans lequel l'oscillation de régime ($\omega_{Osc}$) du régime réel ($\omega_{EM}$) est déterminée en utilisant un régulateur multidimensionnel (11) avec un modèle d'oscillations à deux masses, un couple réel ($T_{EM}$) de la machine électrique (3) et le régime réel ($\omega_{EM}$) de la machine électrique (3), **caractérisé en ce que** l'oscillation de régime ($\omega_{Osc}$) du régime réel ($\omega_{EM}$) est calculée à partir de la différence entre le régime réel ($\omega_{EM}$) et la vitesse de roue ($\omega_2$) et à l'aide des équations suivantes :

$$\omega_{2,T\_EM} = \frac{s\left(s+\frac{K_N}{4}\right)}{(s+K_N)^4} \cdot \frac{4}{J_{EM}\cdot\omega_{Eig}^2} \cdot K_N^3 \cdot T_{EM}$$

$$\text{(Eq. 1)}$$

$$\omega_{2,\omega\_EM} = -\frac{\left(s+\frac{K_N}{4}\right)\cdot\left(s^2+K_S\cdot\omega_{Eig}^2\right)}{(s+K_N)^4} \cdot \frac{4\cdot K_N^3}{\omega_{Eig}^2} \cdot \omega_{EM}$$

$$\text{(Eq. 2),}$$

où $\omega_{2,T\_EM}$ est la part calculée de la vitesse de roue ($\omega_2$) à associer au couple réel ($T_{EM}$) de la machine électrique (3),

et où $\omega_{2,\omega\_EM}$ est la part calculée de la vitesse de roue ($\omega_2$) à associer au régime réel déterminé ($\omega_{EM}$) de la machine électrique (3),

et où $\omega_{Eig}$ est la fréquence de résonance du système d'entraînement (2), $J_{EM}$ est l'inertie de masse de la machine électrique (3), $K_N$, $K_S$ sont des facteurs de mise à l'échelle prédéfinissables, et s est l'opérateur de Laplace.

2. Procédé selon la revendication 1, **caractérisé en ce que**
   pour le calcul de la vitesse de roue ($\omega_2$), les parts calculées $\omega_{2,T\_EM}$ et $\omega_{2,\omega\_EM}$ sont additionnées.

3. Dispositif permettant de faire fonctionner un système d'entraînement (2) qui présente au moins une machine électrique (3), **caractérisé par**
   la réalisation sous forme d'appareil de commande (8) qui est conçu pour exécuter le procédé selon l'une quelconque des revendications 1 à 3, en particulier en cas d'utilisation conforme.

4. Système d'entraînement (2) pour un véhicule automobile, comprenant au moins une machine électrique (3) et un dispositif (8) selon la revendication 4.

**FIG. 1**

**FIG. 2**

FIG. 3

FIG. 4

FIG. 5

FIG. 6

**EP 3 994 025 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2423065 A
- DE 102009054603
- DE 10145891 A1
- US 2012081051 A1
- EP 3249806 A1
- US 5534764 A